**Europäisches Patentamt**

**European Patent Office**

**Office européen des brevets**

(19)

(11) Publication number:     **0 197 670**
**B1**

(12)                        **EUROPEAN PATENT SPECIFICATION**

(45) Date of publication of the patent specification:
23.06.89

(21) Application number: **86301783.6**

(22) Date of filling: **12.03.86**

(51) Int. Cl.⁴: **F 16 L  58/18**

(54) **Improvements in or relating to tube couplings.**

(30) Priority: **12.03.85  GB 8506317**

(43) Date of publication of application:
**15.10.86 Bulletin 86/42**

(45) Publication of the grant of the patent:
**23.06.89 Bulletin 89/34**

(84) Designated Contracting States:
**DE FR**

(56) References cited:
**BE-A-749 909**
**FR-A-2 465 944**
**US-A-2 669 465**
**US-A-3 811 710**

(73) Proprietor: **Guest, John Derek, Horton Bridge
Road, West Drayton Middlesex UB7 8JR (GB)**

(72) Inventor: **Guest, John Derek, Horton Bridge Road,
West Drayton Middlesex UB7 8JR (GB)**

(74) Representative: **Bayliss, Geoffrey Cyril, BOULT,
WADE & TENNANT 27 Furnival Street, London
EC4A 1PQ (GB)**

Note: Within nine months from the publication of the mention of the grant of the European patent, any person may give notice to
the European Patent Office of opposition to the European patent granted. Notice of opposition shall be filed in a written reasoned
statement. It shall not be deemed to have been filed until the opposition fee has been paid (Art. 99(1) European patent convension).

LIBER, STOCKHOLM 1989

## Description

This invention relates to tube couplings and is particularly although not exclusively applicable to tube couplings for potable water and domestic heating appliances.

Stringent regulations cover the use of couplings in potable water and domestic heating appliances and must be made from materials which are both hygienic where there is any possibility of contact with potable water and also rugged to withstand the different loads imposed. Traditionally materials which have been used for such couplings have been brass and cast iron but these are now becoming less acceptable to the relevant authorities.

Additional problems arise for couplings to be used for domestic central heating systems since the latter produce particularly corrosive acid/water mixtures which eat into many known materials otherwise suitable for such equipment. Materials such as polybutelene are considered to be satisfactory for such couplings but have the disadvantage that a significant curing time is required in the manufacture of couplings from such material and also a rather large section is required to provide adequate strength. Another possible material for such couplings is polyethelene but this has to have a substantial "soak" period of at least 24 hours in an autoclave.

US-A-3811710 discloses a sealed joint for threaded tubular members comprising a pair of male threaded members, a female threaded member to receive the male members in opposite ends thereof, the female threaded member having internal grooves interrupting its internal threads and sealing rings in the grooves formed with internal tapers to seal with external tapers on the male member. The female threaded member has a coated surface between the sealing rings.

This invention provides a tube coupling comprising a hollow body having a throughway to receive a tube from at least one end of the throughway, means in the throughway adjacent said one end to receive and hold a tube in the throughway, an annular seal encircling the throughway to seal with a tube in the throughway, and a liner extending along the throughway from the seal to prevent fluid from the tube having direct contact with the hollow body the seal and liner being formed from an inert material; and in that the means to receive and hold a tube in the throughway comprise a releasable tube gripping device, wherein an annular wall encircles the throughway at a location spaced from said one end of throughway to form an end stop for a tube and said liner extends over the annular wall so that an end of a tube abuts the liner covering the wall, and wherein said annular seal is formed integrally with the liner adjacent the tube gripping device to seal with the tube inserted in the throughway.

Thus, the invention provides an arrangement in which the coupling body is protected from the fluids carried by a tube holding the coupling body with an arrangement in which the tube is simply inserted in the coupling body, located in the body by the annular wall and held in the body by the releasable coupling device so that the tube can be readily withdrawn. The coupling body may be formed from an engineering type material such as, for example, acetal copolymer with an inner liner and seal formed from a polymethylene material or silicone rubber which could be injection moulded inside the preformed outer body.

In one arrangement according to the invention, the annular seal is formed at an end of the liner adjacent the tube gripping device and spaced from said annular wall. In that arrangement, a further annular seal may be formed integrally with the liner and encircling the throughway part way along the liner from both the first mentioned seal and annular wall to provide an additional seal with a tube to be located in the throughway.

In a further arrangement, the integral annular seal may be formed part way along the liner from the annular wall to lie adjacent the tube gripping device. In the latter arrangement, an additional annular seal may encircle the throughway adjacent the end of the liner remote from the annular wall and adjacent the tube gripping device to provide an additional seal for a tube located in the throughway. The throughway may have an annular step facing toward said one end thereof and against which the seal at the end of the liner abuts to support the seal against movement along the throughway from said one end.

More particularly, the side of the seal engaging said annular step may be formed with a projecting annular tongue which engages in an annular recess in said step to assist in supporting the seal in the throughway.

In any of the above arrangements, the liner may be formed from polyethylene material or silicone rubber injection moulded in the throughway. Also in any of the above arrangements, the throughway in the hollow body may have a plurality of open ends each having one of said tube gripping devices to receive and hold a tube extending through the respective open ends in the coupling body, the annular wall being disposed through the throughway in the hollow body between said ends and the liner extending over the annular wall and towards each of the open ends in the hollow body with annular seals formed integral with the liner to seal with tubes extending through the open ends into the coupling body.

The following is a specific description of two embodiments of the invention, reference being made to the accompanying drawings in which:

Figure 1 is a sectional view through one form of double-ended tube coupling; and
Figure 2 illustrates a modification of the coupling of Figure 1.

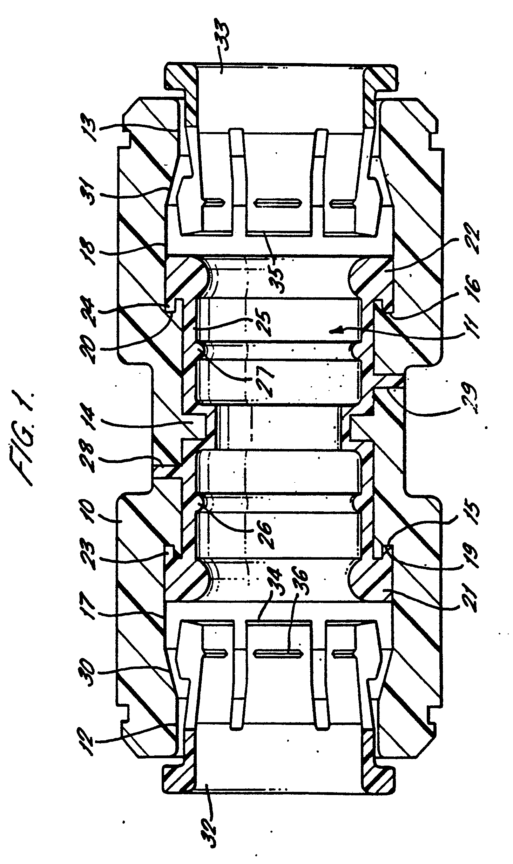

Referring firstly to the Figure 1 of the drawings, there is shown a double-ended tube coupling for connecting two lengths of pipe (not shown) together and comprising an injection moulded acetal copolymer hollow generally tubular body 10 having a central throughway indicated at 11 and open ends 12 and 13.

Midway along the throughway 11 the body 10 has an integral annular wall 14 encircling the throughway to define a stop against which the ends of tubes inserted from either end of the throughway engage.

Part way along the throughway from the annular wall 14 towards each end 12, 13 of the throughway the wall of the throughway is stepped out at 15, 16 to form enlarged bores 17, 18 extending towards the open ends 12, 13 of the throughway. The steps or shoulders 15, 16 thus formed in the bore face towards the open ends 12, 13 of the throughway and each step has an annular recess, 19, 20 again facing towards the open ends of the throughway. Annular resilient seals 21, 22, are formed in the enlarged bores 17, 18, against the shoulders 15, 16 to seal with the outer surfaces of tubes inserted into the throughway. Each seal has a resilient tongue 23, 24 and the tongues engage in the recesses 19, 20 to assist in supporting the seal in position.

The seals are formed integrally with a liner 25 which extends from seal to seal along the throughway and over the shoulder 14 midway along the throughway. Between the shoulder and each seal, the liner is formed with additional raised sealing ribs 26, 27 to engage the outer surfaces of the tube inserted in the throughway. The seal/liner are formed by injection moulding in the hollow body from polyethylene material or silicon rubber and the wall of the bores is formed with bores 28, 29 on either side of the annular shoulder through which the material is injected in forming the seal/liner in the body.

The material of the resilient seals and liner is inert to potable water or water used in domestic central heating systems.

At the ends, 12, 13 of the body, the throughway is formed with tapering cams 30, 31 reducing towards the ends of the body and collets 32, 33 are disposed in the ends of the body and have resilient fingers 34, 35 extending into the body and formed with metal insert grips pastway along the inner sides of the fingers for gripping a tube extending through the collet. The resilient fingers of the collets are compressed into engagement with the tubes extending through the collets by engagement with the outer sides of the resilient fingers with the cams 30, 31 to hold the tubes in the throughway. The construction of the tube coupling is generally as described and illustrated in our U.K. Patent Nos.1520742, 1573757, 2007322, 2051280 and 2052662 to which reference should be made.

It will of course be understood that other forms of locking devices for securing the tubes in the body may be employed such as conventional compression joints.

In use two tubes to be connected together are located in alignment to one another and the ends inserted in the coupling body through the collets, through the seals 21, 26 or 22, 27 and into engagement with the lined annular walls 14. The collets 32, 33 are pulled outwardly to force the resilient fingers of the collets into engagement with the tube surfaces and thereby lock the tubes in position. The seals 21, 26 and 22, 27 seal with the outer surfaces of the tube and thereby prevent loss of fluid from the coupling and, by virtue of the inert liner, the liquid flowing through the tube is prevented from coming into contact with any part of the outer body with which corrosive action could occur.

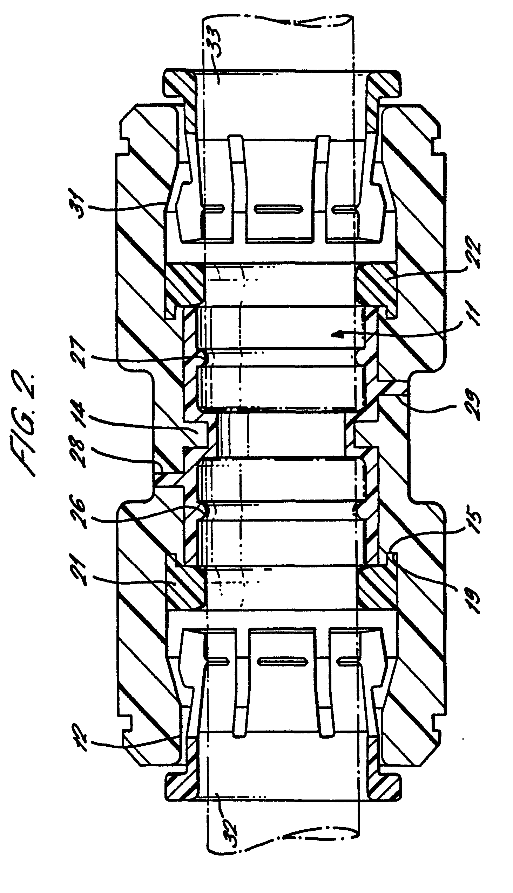

Figures 2 shows a further embodiment of the invention which is generally similar to that described above except that the seals 21, 22 are formed separately from the liner 25 and may be of the same or of different material but in either case, would be formed from a material which is inert to the liquid to be conducted by the tubes connected by the coupling. The arrangement is otherwise similar to that described above.

It will be understood that the invention is not restricted to double-ended tube couplings as described above and is equally applicable to any form of tube coupling whatever the format of the coupling whether it be a straight coupling, T-shaped, elbow or any other arrangement.

## Claims

1. A tube coupling comprising a hollow body (10) having a throughway (11) to receive a tube from at least one end (12, 13) of the throughway, means (32, 33) in the throughway adjacent said one end to receive and hold a tube in the throughway, an annular seal (21, 22, 26, 27) encircling the throughway to seal with a tube in the throughway, and a liner (25) extending along the throughway from the seal to prevent fluid from the tube having direct contact with the hollow body, the seal and liner being formed from an inert material; characterised in that the means to receive and hold a tube in the throughway comprise a releasable tube gripping device (32, 33) in that an annular wall (14) encircles the throughway at a location spaced from said one end of throughway to form an end stop for a tube and said liner extends over the annular wall so that an end of a tube abuts the liner covering the wall, and in that said annular seal (21, 22, 26, 27) is formed integrally with the liner (25) adjacent the tube gripping device (32, 33) to seal with the tube inserted in the throughway.

2. A tube coupling as claimed in Claim 1, characterised in that the annular seal (21, 22) is formed at an end of the liner (25) adjacent the tube gripping device (32, 33) and spaced from said annular wall (14).

3. A tube coupling as claimed in Claim 2, characterised in that a further annular seal (26, 27) is formed integrally with the liner (25) and encircling the throughway part way along the liner from both the first mentioned seal (21, 22) and annular wall (14) to provide an additional seal with a tube to be located in the throughway.

4. A tube coupling as claimed in Claim 1, characterised in that the integral annular seal (26, 27) is formed part way along the liner (25) from the annular wall (14) to lie adjacent the tube gripping device.

5. A tube coupling as claimed in Claim 4, characterised in that an additional annular seal (21, 22) encircles the throughway (11) adjacent the end of the liner (25) remote from the annular wall (14) and adjacent the tube gripping device (32, 33) to provide an additional seal for a tube located in the throughway.

6. A tube coupling as claimed in Claim 3, Claim 4 or Claim 5, characterised in that the throughway (11) has an annular step (15, 16) facing toward said one end thereof and against which the seal (21, 22) at the end of the liner (25) abuts to support the seal against movement along the throughway from said one end.

7. A tube coupling as claimed in Claim 6, characterised in that the side of the seal (21, 22) engaging said annular step (15, 16) is formed with a projecting annular tongue which engages in an annular recess (19, 20) in said step to assist in supporting the seal in the throughway.

8. A tube coupling as claimed in any of the preceding claims, characterised in that the liner (25) is formed from polyethylene material or silicone rubber injection moulded in the throughway.

9. A tube coupling as claimed in any of the preceding claims, characterised in that the throughway (11) in the hollow body (10) has a plurality of open ends (12) each having one of said tube gripping devices (32, 33) to receive and hold a tube extending through the respective open ends in the coupling body, the annular wall being disposed through the throughway in the hollow body between said ends and the liner extending over the annular wall and towards each of the open ends in the hollow body with annular seals formed integral with the liner to seal with tubes extending through the open ends into the coupling body.

## Patentansprüche

1. Rohrkupplung bestehend aus einem Hohlkörper (10) mit einem Durchlaß (11) zur Aufnahme eines Rohres wenigstens von einem Ende (12, 13) des Durchlasses her, Mitteln (32, 33) im Durchlaß in der Nähe des einen Endes zum Aufnehmen und Halten eines Rohres im Durchlaß, einer ringförmigen Dichtung (21, 22; 26, 27) die den Durchlaß umgibt, um gegenüber einem Rohr im Durchlaß abzudichten, und einer Einlage (25), die sich entlang des Durchlasses der Dichtung erstreckt, um zu verhindern, daß Fluid aus dem Rohr direkten Kontakt mit dem Hohlkörper bekommt, wobei die Dichtung und die Einlage auseinem inerten Material hergestellt sind, dadurch gekennzeichnet, daß die Mittel zum Aufnehmen und Halten eines Rohres in dem Durchlaß eine lösbare Rohrgreifeinrichtung (32, 33) aufweisen, eine ringförmige Wand (14) den Durchlaß an einem Ort im Abstand zu dem einen Ende des Durchlasses umgibt, um einen Endanschlag für ein Rohr zu bilden und die Einlage sich über die ringförmige Wand erstreckt, so daß ein Ende eines Rohres an der Einlage anschlägt, die die Wand bedeckt, und daß die ringförmige Dichtung (21, 22; 26, 27) in der Nähe der Rohrgreifeinrichtung (32, 33) einstückig mit der Einlage (25) ausgebildet ist, um das in den Durchlaß eingesetzte Rohr abzudichten.

2. Rohrkupplung nach Anspruch 1, dadurch gekennzeichnet, daß die ringförmige Dichtung (21, 22) an einem Ende der Einlage (25) in der Nähe der Rohrgreifeinrichtung (32, 33) und mit einem Abstand zur ringförmigen Wand (14) ausgebildet ist.

3. Rohrkupplung nach Anspruch 2, dadurch gekennzeichnet, daß eine weitere ringförmige Dichtung (26, 27) einstückig mit der Einlage (25) ausgebildet ist, und den Durchlaß entlang der Einlage ein Stück sowohl von der zuerst genannten Dichtung (21, 22) als auch von der ringförmigen Wand (14) aus umgibt, um gegenüber dem im Durchlaß eingesetzten Rohr eine zusätzliche Dichtung zu erzeugen.

4. Rohrkupplung nach Anspruch 1, dadurch gekennzeichnet, daß die einstückige ringförmige Dichtung (26, 27) ein Stück entlang der Einlage (25) von der ringförmigen Wand (14) aus ausgebildet ist, um in der Nähe der Rohrgreifeinrichtung zu liegen.

5. Rohrkupplung nach Anspruch 4, dadurch gekennzeichnet, daß eine zusätzliche ringförmige Dichtung (21, 22) den Durchlaß (11) in der Nähe des von der ringförmigen Wand (14) abgewandten Endes der Einlage (25) und in der Nähe der Rohr - Greifeinrichtung (32, 33) umgibt, um für ein im Durchlaß angeordnetes Rohr eine zusätzliche Dichtung zu schaffen.

6. Rohrkupplung nach Anspruch 3, 4 oder 5, dadurch gekennzeichnet , daß der Durchlaß (11) eine ringförmige Stufe (15, 16), die jeweils dem einen Ende zugewandt ist und an der die Dichtung (21, 22) am Ende der Einlage (25) anliegt, um die Dichtung gegen Verschieben entlang des Durchlasses von diesem einen Ende her, zu halten.

7. Rohrkupplung nach Anspruch 6, dadurch gekennzeichnet, daß die mit dieser ringförmigen Stufe (15, 16) im Eingriff befindliche Seite der Dichtung (21, 22) mit einer vorstehenden, ringförmigen Zunge versehen ist, die in eine ringförmige Aussparung (19, 20) in dieser Stufe eingreift, und zum Halten der Dichtung im Durchlaß beiträgt.

8. Rohrkupplung nach einem der vorstehenden Ansprüche, dadurch gekennzeichnet , daß die Einlage (25) aus einem Polyäthylen oder Silikongummi mittels Einspritzen in den Durchlaß hergestellt ist.

9. Rohrkupplung nach einem der vorstehenden Ansprüche, dadurch gekennzeichnet , daß der Durchlaß (11) im Hohlkörper (10) eine Anzahl offener Enden (12) aufweist, die jeweils eine der Rohr - Greifeinrichtungen (32, 33) aufweisen, um ein durch das jeweilige offene Ende in den Kupplungskörper sich erstreckendes Rohr aufzunehmen und zu halten, wobei die ringförmige Wand in dem Durchlaß in dem Hohlkörper zwischen den Enden angeordnet ist und die Einlage sich über die ringförmige Wand und auf jedes der offenen Enden zu im Hohlkörper erstreckt, wobei die ringförmigen Dichtungen einstückig mit der Einlage ausgebildet sind, um die durch die offenen Enden in den Kupplungskörper sich erstreckenden Rohre abzudichten.

**Revendications**

1. Raccord de tubes comprenant un corps creux (10) présentant une traversée (11) destinée à recevoir un tube à partir d'au moins une première extrémité (12, 13) de la traversée, des moyens (32, 33) situés dans la traversée à proximité immédiate de ladite première extrémité pour recevoir et maintenir un tube dans la traversée, un joint annulaire d'étanchéité (21, 22; 26, 27) entourant la traversée pour assurer l'étanchéité avec un tube disposé dans la traversée, et une garniture (25) s'étendant le long de la traversée à partir du joint d'étanchéité afin d'empêcher un fluide provenant du tube d'entrer directement en contact avec le corps creux, le joint d'étanchéité et la garniture étant formés à partir d'une matière inerte; caractérisé en ce que les moyens destinés à recevoir et maintenir un tube dans la traversée comprennent un dispositif de serrage amovible (32, 33) de tube dans lequel une paroi annulaire (14) entoure la traversée en une position espacée de ladite première extrémité de la traversée pour former une butée extrême pour un tube et ladite garniture s'étend sur la paroi annulaire afin qu'une extrémité d'un tube bute contre la garniture recouvrant la paroi, et en ce que ledit joint annulaire d'étanchéité (21, 22; 26, 27) est réalisé d'une seule pièce avec la garniture (25) à proximité immédiate du dispositif (32, 33) de serrage de tube afin d'assurer l'étanchéité avec le tube inséré dans la traversée.

2. Raccord de tubes selon la revendication 1, caractérisé en ce que le joint annulaire d'étanchéité (21, 22) est formé à une extrémité de la garniture (25) adjacente au dispositif (32, 33) de serrage de tube et espacée de ladite paroi annulaire (14).

3. Raccord de tubes selon la revendication 2, caractérisé en ce qu'un autre joint annulaire d'étanchéité (26, 27) est réalisé d'une seule pièce avec la garniture (25) et entoure la traversée sur une partie de la longueur de la garniture, à partir à la fois du premier joint d'étanchéité cité (21, 22) et d'une paroi annulaire (14) pour former un autre joint étanche avec un tube devant être disposé dans la traversée.

4. Raccord de tubes selon la revendication 1, caractérisé en ce que le joint annulaire intégré (26, 27) est formé sur une partie de la longueur de la garniture (25) à partir de la paroi annulaire (14) de façon à s'étendre à proximité immédiate du dispositif de serrage de tube.

5. Raccord de tubes selon la revendication 4, caractérisé en ce qu'un autre joint annulaire d'étanchéité (21, 22) entoure la traversée (11) à proximité immédiate de l'extrémité de la garniture (25) éloignée de la paroi annulaire (14) et à proximité immédiate du dispositif (32, 33) de serrage de tube afin de constituer un autre joint étanche pour un tube disposé dans la traversée.

6. Raccord de tubes selon la revendication 3, la revendication 4 ou la revendication 5, caractérisé en ce que la traversée (11) comporte un épaulement annulaire (15, 16) tourné vers ladite première extrémité de cette traversée et contre lequel le joint étanche (21, 22) situé à l'extrémité de la garniture (25) bute afin d'être supporté pour ne pas pouvoir se déplacer le long de la traversée à partir de ladite première extrémité.

7. Raccord de tubes selon la revendication 6, caractérisé en ce que le côté du joint d'étanchéité (21, 22) en contact avec ledit épaulement annulaire (15, 16) est formé de façon à comporter une languette annulaire en saillie qui s'engage dans un évidement annulaire (19, 20) situé dans ledit épaulement afin d'aider à supporter le joint d'étanchéité dans la traversée.

8. Raccord de tubes selon l'une quelconque des revendications précédentes, caractérisé en ce que la garniture (25) est formée à partir d'une matière du type polyéthylène ou d'un caoutchouc siliconé, moulé par injection dans la traversée.

9. Raccord de tubes selon l'une quelconque des revendications précédentes, caractérisé en ce que la traversée (11) dans le corps creux (10) présente plusieurs extrémités ouvertes (12) ayant chacune l'un desdits dispositifs (32, 33) de serrage de tube pour recevoir et maintenir un tube s'étendant à travers les extrémités ouvertes respectives dans le corps du raccord, la paroi annulaire étant disposée dans la traversée à l'intérieur du corps creux, entre lesdites extrémités, et la garniture s'étendant sur la paroi annulaire et vers chacune des extrémités ouvertes dans le corps creux, des joints annulaires d'étanchéité étant formés d'une seule pièce avec la garniture pour assurer l'étanchéité avec des tubes pénétrant dans le corps du raccord en passant par les extrémités ouvertes.

FIG. 1.

*FIG. 2.*